# EUROPEAN PATENT SPECIFICATION

(11) **EP 1 995 415 B1**
(45) Date of publication and mention of the grant of the patent: **24.07.2013**
(21) Application number: 08007567.4
(22) Date of filing: 18.04.2008
(51) Int. Cl.: F01D 25/24, F01D 25/30, F02K 1/80

(54) **Gas turbine exhaust duct installation**
Abgaskanalanordnung für eine Gasturbine
Installation de tuyau de gaz d'échappement d'une turbine à gaz

(30) Priority: 24.05.2007 GB 0709949
(43) Date of publication of application: 26.11.2008
(73) Proprietor: Rolls-Royce plc, London SW1E 6AT (GB)
(72) Inventor: Westlake, Michael John, Charfield, Gloucestershire GL12 8TS (GB)
(74) Representative: Roberts, Nicholas John

(56) References cited:
- GB-A- 722 338
- GB-A- 2 238 027
- US-A- 2 580 207
- US-A- 2 604 339
- US-A- 2 940 692

## Description

This invention relates to a duct installation and is particularly, although not exclusively, concerned with such an installation comprising a gas turbine engine casing which is connected to an exhaust duct such as a jet pipe.

It is usual for the exhaust duct of a gas turbine engine to be a component separate from the casing enclosing the engine. The exhaust duct is connected to the casing in a sealed manner. When the engine is installed in an aircraft with the exhaust duct connected to the engine casing, the exhaust duct can obstruct access to the rear of the engine for inspection purposes. Also, removal of the engine from the airframe may be hindered if removal is attempted while the exhaust duct remains connected to the casing. Consequently, it is known to provide for the exhaust duct to be releasably connected to the engine casing so that it can be disconnected, and moved away from the engine casing, to provide access for inspection instruments through the gap between the engine casing and the exhaust duct.

In some circumstances, it is undesirable for the exhaust duct to be displaced with respect to the airframe. However, if the exhaust duct is fixed, it becomes impossible to access the rear of the engine unless the engine itself is moved away from the exhaust duct, or removed entirely from the aircraft.

GB 722,338 discloses a duct arrangement comprising a jet pipe having an end ring bolted thereto and extending downstream, and a tailpipe downstream of it with an end ring bolted thereto and extending upstream. The end rings overlap axially and seal together by a combination of sealing rings and complementary grooves.

US2940692A discloses a by-pass gas-turbine engine installation in an aircraft structure where, the aircraft structure provides part at least of the outer wall of the by-pass duct of the engine, whereof the compressor sections, the combustion in equipment and turbine section are removable as a unit from said aircraft structure without removal of said outer wall part.

GB2238027 discloses a shield which shields an attachment between two members forming a boundary for a gas stream. The shield reduces turbulence in the gas stream, thus reducing drag and can be desirably used in relation to a centerbody, comprising such members, of an aircraft gas turbine engine.

US2604339A discloses in combination with a pair of coaxial pipes having spaced adjacent ends, a circumferential bellows connecting the ends of said pipes, a circumferential substantially rigid bell on one of said pipes and curving outwardly around a portion of said bellows, a mating shell attached to said other pipe and fitting over said bell, the radii of curvature of said bell and shell centring on a circle substantially concentric with said coaxial pipes, said shell having a plurality of axially extending cuts therein to provide a plurality of flexible fingers therein; and means for holding said fingers in frictional contact with said bell.

US 2,580,207A discloses a jet pipe with an extension connected to an exhaust duct, the exhaust duct having a sleeve in sliding engagement with the exhaust pipe. There is an air gap between the sleeve and the jet pipe extension.

According to the present invention there is provided an exhaust duct installation for a gas turbine engine comprising a first tubular member having a central axis, and a second tubular member which is connected to one end of the first tubular member, characterised in that the first tubular member comprises a main body and an end section which engages the second tubular member, the end section being connected to the main body by a releasable coupling, and being axially displaceable with respect to the second tubular member in a direction away from the main body, following release of the coupling, to permit access to the interior of the gas turbine engine past the exhaust duct installation.

The second tubular member may be received telescopically within the end section. A sealing member may be disposed radially between the end section and the second tubular member.

The coupling may comprise end flanges on the main body and the end member, which end flanges abut each other at respective transverse faces. The transverse faces may be provided with axial locating means. The coupling may further comprise a clamping member which is releasably fitted over the flanges to maintain them in engagement with each other. The flanges may have respective external surfaces which converge in a radially outwards direction, the clamping member comprising a circumferential channel having internal surfaces which are complementary to the external surfaces of the flanges, and means for circumferentially tensioning the channel.

The first tubular member may comprise a casing of a gas turbine engine, and the second tubular member may comprise an exhaust duct of the gas turbine engine.

Other aspects of the present invention provide a gas turbine engine including a duct installation as defined above, and an aircraft having such a gas turbine engine, the exhaust duct being fixed in position with respect to an airframe of the aircraft.

For a better understanding of the present invention, and to show more clearly how it may be carried into effect, reference will now be made, by way of example, to the accompanying drawings, in which:
Figure 1 is a cross-sectional view of the rear end of a gas turbine engine;
Figure 2 is an enlarged view of part of Figure 1; and
Figure 3 corresponds to Figure 2 but shows the components in an alternative configuration.

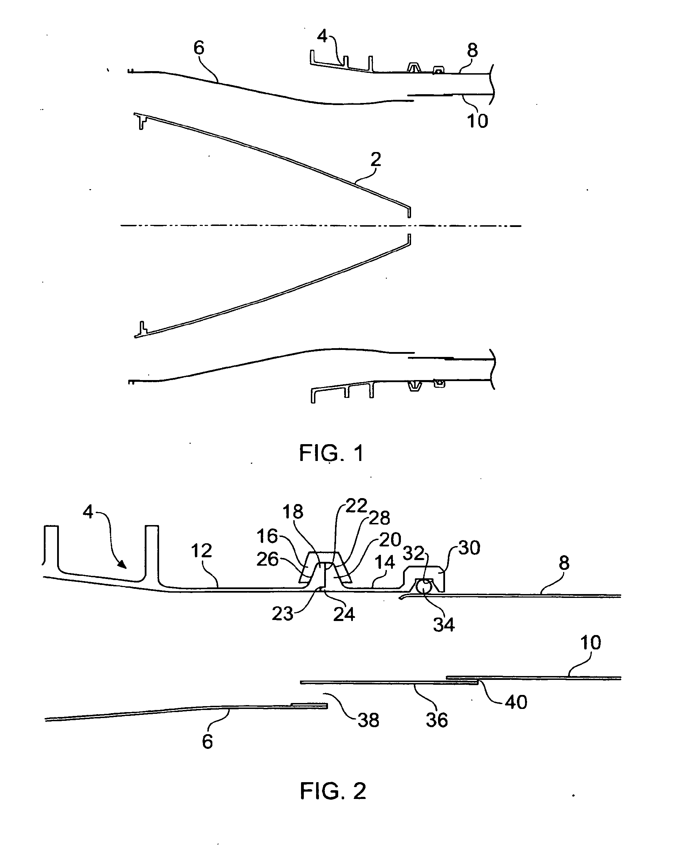

The engine illustrated in Figure 1 comprises an exhaust cone 2 extending into a rear casing 4. A liner 6 extends around the exhaust cone 2 and is supported within the casing 4 by suitable support structures (not shown).

An exhaust duct or jet pipe 8 extends from the casing 4 and has an exhaust liner 10 supported within the exhaust duct 8 by suitable supporting structure (not shown).

The rear casing 4 comprises a main body 12 and an end section 14. In normal operation of the engine, the main casing 12 and the end section 14 are secured together with a clamping member 16 which comprises a circumferential channel which engages flanges 18, 20 on the mating ends of the main casing 12 and the end section 14. The flanges 18, 20 have mating inner surfaces which meet at a joint 22. At the radially inner end of the joint 22, the flange 18 has a circumferential recess 23 which accommodates a circumferential rib 24 of the flange 20, so as to provide axial alignment of the main body 12 and the end section 14.

The outer surfaces 26, 28 of the flanges 18, 20 converge in the radially outward direction. The circumferential channel of the clamping member has internal surfaces which are complementary to the external surfaces 26, 28 so that, when the circumferential channel is tensioned around the flanges 18, 20 by means of a suitable tensioning arrangement, the flanges 18, 20 are forced into secure engagement with each other.

At the end of the end section 14 away from the flange 20, there is a circumferential enlargement 30 provided with an internal circumferential groove 32 receiving an annular seal 34. The seal 34 is thus situated radially between the end section 14 and the exhaust duct 8 to prevent the escape of gas from the interior of the casing 4 and the exhaust duct 8.

As with the main body 12 and the exhaust duct 8, the end section 14 supports an intermediate liner 36.

In operation, exhaust gas flows in the passage defined between the exhaust cone 2 and the liners 6, 36, 10. Cooling air is supplied to the annular duct defined between the rear casing 4 and the exhaust duct 8 on the outside and the liners 6, 36, 10 on the inside. Gaps 38, 40 between the liners 6, 36, 10 enable some of the cooling air to bleed through the assembly of liners into the exhaust flow.

If access is required to the interior of the engine, for example for inspection purposes, it may be desirable to gain such access from the rear of the engine. However, in some circumstances, the nature of the exhaust duct 8 may make such access difficult or impossible. Furthermore, some airframe designs may require the exhaust duct 8 to be fixed to the airframe in such a way that it cannot conveniently be displaced away from the engine, and in particular from the rear casing 4. Similarly, such airframe designs make it difficult to remove the engine and the exhaust duct as a unit without major dismantling (and subsequent major re-assembly) of the airframe.

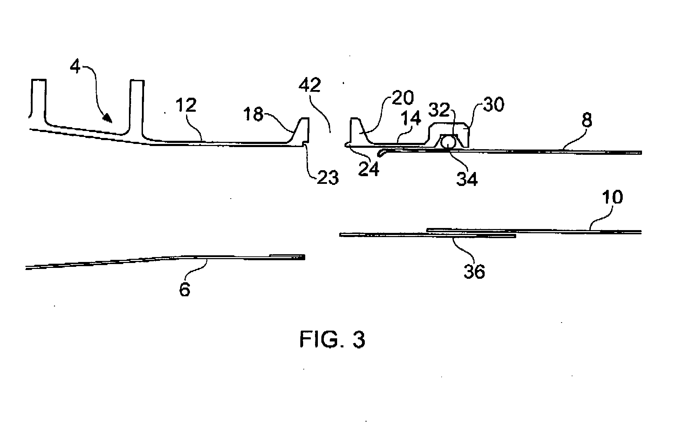

In order to avoid such difficulties, the main body 12 of the rear casing 4 and the end section 14 can be separated from one another at the flanges 18, 20. Once the clamping member 16 is disengaged from the flanges 18, 20, the end section 14 can be displaced away from the main body 12, the seal 34 then sliding over the exhaust duct 8. This movement of the end section 14 takes with it the associated liner 36, leaving an annular gap 42, as shown in Figure 3, through which, for example, an inspection instrument (such as an intrascope) can be introduced. Alternatively, since the main casing 12 is separated from the exhaust duct 8, it is possible to remove the engine without disturbing the exhaust duct 8.

Refitting of the end section 14 to the main body 12 is the reverse of the separation process, the end section 14 simply being slid axially to the left as seen in Figure 3 so that the flanges 18, 20 contact each other at the joint 22, and the clamping member is replaced and tensioned.

## Claims

1. Exhaust duct installation for a gas turbine engine comprising a first tubular member (4) having a central axis, and a second tubular member (8) which is connected to one end of the first tubular member (4), **characterised in that** the first tubular member (4) comprises a main body (12) and an end section (14) which engages the second tubular member (8), the end section (14) being connected to the main body (12) by a releasable coupling and being axially displaceable with respect to the second tubular member (8), in a direction away from the main body (12), following release of the coupling, to permit access to the interior of the gas turbine engine past the exhaust duct installation.

2. Exhaust duct installation as claimed in claim 1, **characterised in that** the second tubular member (8), is received telescopically within the end section (14).

3. Exhaust duct installation as claimed in claim 2, **characterised in that** a seal (34) is disposed radially between the end section (14) and the second tubular member (8).

4. Exhaust duct installation as claimed in any one of the preceding claims, **characterised in that** the main body (12) and the end section (14) are provided with end flanges (18, 20) which abut at respective transverse faces (22).

5. Exhaust duct installation as claimed in claim 4, **characterised in that** the transverse faces of the end flanges (18, 20) are provided with axial locating means (23, 24).

6. Exhaust duct installation as claimed in any one of the preceding claims, **characterised in that** the releasable coupling comprises a clamping member (16) releasably fitted over the flanges (18, 20).

7. Exhaust duct installation as claimed in claim 6, **characterised in that** the end flanges (18, 20), have radially outwardly convergent external surfaces (26, 28), the clamping member (16) comprising a circumferential channel having internal surfaces which are complementary to the external surfaces (26, 28) of the end flanges (18, 20), the clamping member (16) further comprising means for circumferentially tensioning the circumferential channel.

8. Exhaust duct installation as claimed in any one of the preceding claims, **characterised in that** a liner assembly (6, 36, 10) is supported within the main body (12), the end section (14) and the second tubular member (8), the liner assembly including a liner section (36) which is supported by the end section (14).

9. Exhaust duct installation as claimed in any one of the preceding claims, **characterised in that** the first tubular member (4) comprises a casing of a gas turbine engine, and the second tubular member (8) comprises an exhaust duct for the gas turbine engine.

10. A gas turbine engine comprising an exhaust duct installation in accordance with claim 9.

11. An aircraft comprising an airframe accommodating a gas turbine engine in accordance with claim 10, **characterised in that** the exhaust duct (8) is fixed with respect to the airframe.

## Patentansprüche

1. Abgaskanalinstallation für ein Gasturbinentriebwerk, mit einem ersten rohrförmigen Bauteil (4) mit einer zentralen Achse, und einem zweiten rohrförmigen Bauteil (8), das mit einem Ende des ersten rohrförmigen Bauteils (4) verbunden ist, **dadurch gekennzeichnet, dass** das erste rohrförmige Bauteil (4) einen Hauptkörper (12) und einen Endabschnitt (14) aufweist, der das zweite rohrförmige Bauteil (8) erfaßt, wobei der Endabschnitt (14) mit dem Hauptkörper (12) durch eine lösbare Kupplung verbunden ist und nach Lösen der Kupplung axial mit Bezug auf das zweite rohrförmige Bauteil (8) in Richtung vom Hauptkörper (12) weg verschiebbar ist, um den Zugang zum Inneren des Gasturbinentriebwerks nach der Abgaskanalinstallation zu ermöglichen.

2. Abgaskanalinstallation nach Anspruch 1, **dadurch gekennzeichnet, dass** das zweite rohrförmige Bauteil (8) teleskopisch im Endabschnitt (14) aufgenommen ist.

3. Abgaskanalinstallation nach Anspruch 2, **dadurch gekennzeichnet, dass** eine Dichtung (34) radial zwischen dem Endabschnitt (14) und dem zweiten rohrförmigen Bauteil (8) angeordnet ist.

4. Abgaskanalinstallation nach einem der vorhergehenden Ansprüche, **dadurch gekennzeichnet, dass** der Hauptkörper (12) und der Endabschnitt (14) mit Endflanschen (18, 20) ausgebildet sind, die mit jeweiligen Querflächen (22) aneinanderstoßen.

5. Abgaskanalinstallation nach Anspruch 4, **dadurch gekennzeichnet, dass** die Querflächen der Endflansche (18, 20) mit axialen Positioniermitteln (23, 24) versehen sind.

6. Abgaskanalinstallation nach einem der vorhergehenden Ansprüche, **dadurch gekennzeichnet, dass** die lösbare Kupplung ein Klemmteil (16) aufweist, das lösbar über den Flanschen (18, 20) sitzt.

7. Abgaskanalinstallation nach Anspruch 6, **dadurch gekennzeichnet, dass** die Endflansche (18, 20) radial auswärts konvergente Außenflächen (26, 28) haben, dass weiter das Klemmteil (16) eine umfangsmäßige Furche mit Innenflächen aufweist, die komplementär zu den Außenflächen (26, 28) der Endflansche (18, 20) sind, und das Klemmteil (16) weiter Mittel zur umfangsmäßigen Verspannung der umfangsmäßigen Furche aufweist.

8. Abgaskanalinstallation nach einem der vorhergehenden Ansprüche, **dadurch gekennzeichnet, dass** eine Auskleidungsbaugruppe (6, 36, 10) innerhalb des Hauptkörpers (12), des Endabschnitts (14) und des zweiten rohrförmigen Bauteils (8) gehaltert ist, wobei die Auskleidungsbaugruppe einen Auskleidungsabschnitt (36) aufweist, der durch den Endabschnitt (14) gehaltert ist.

9. Abgaskanalinstallation nach einem der vorhergehenden Ansprüche, **dadurch gekennzeichnet, dass** das erste rohrförmige Bauteil (4) ein Gehäuse eines Gasturbinentriebwerks umfaßt, und das zweite rohrförmige Bauteil (8) einen Abgaskanal für das Gastubinentriebwerk umfaßt.

10. Gasturbinentriebwerk mit einer Abgaskanalinstallation nach Anspruch 9.

11. Flugzeug mit einer Zelle, die ein Gasturbinentriebwerk gemäß Anspruch 10 aufnimmt, **dadurch gekennzeichnet, dass** der Abgaskanal (8) mit Bezug auf die Zelle feststehend ist.

## Revendications

1. Installation de tuyau de gaz d'échappement pour un moteur de turbine à gaz comprenant un premier organe tubulaire (4) ayant un axe central, et un deuxième organe tubulaire (8) qui est relié à une extrémité du premier organe tubulaire (4), **caractérisée en ce que** le premier organe tubulaire (4) comprend un corps principal (12) et une section d'extrémité (14) qui se met en prise avec le deuxième organe tubulaire (8), la section d'extrémité (14) étant reliée au corps principal (12) par un accouplement libérable et étant axialement déplaçable par rapport au deuxième organe tubulaire (8), dans une direction à l'opposé du corps principal (12), à la suite de la libération de l'accouplement, pour permettre l'accès à l'intérieur du moteur de turbine à gaz après l'installation de tuyau de gaz d'échappement.

2. Installation de tuyau de gaz d'échappement selon la revendication 1, **caractérisée en ce que** le deuxième organe tubulaire (8) est reçu de manière télescopique à l'intérieur de la section d'extrémité (14).

3. Installation de tuyau de gaz d'échappement selon la revendication 2, **caractérisée en ce qu'**un joint (34) est disposé radialement entre la section d'extrémité (14) et le deuxième organe tubulaire (8).

4. Installation de tuyau de gaz d'échappement selon l'une quelconque des revendications précédentes, **caractérisée en ce que** le corps principal (12) et la section d'extrémité (14) sont pourvus de brides d'extrémité (18, 20) qui viennent en butée contre des faces transversales respectives (22).

5. Installation de tuyau de gaz d'échappement selon la revendication 4, **caractérisée en ce que** les faces transversales des brides d'extrémité (18, 20) sont pourvues de moyens de localisation axiale (23, 24).

6. Installation de tuyau de gaz d'échappement selon l'une quelconque des revendications précédentes, **caractérisée en ce que** l'accouplement libérable comprend un organe de serrage (16) monté de manière libérable sur les brides (18, 20).

7. Installation de tuyau de gaz d'échappement selon la revendication 6, **caractérisée en ce que** les brides d'extrémité (18, 20) ont des surfaces externes convergeant radialement vers l'extérieur (26, 28), l'organe de serrage (16) comprenant un canal circonférentiel ayant des surfaces internes qui sont complémentaires des surfaces externes (26, 28) des brides d'extrémité (18, 20), l'organe de serrage (16) comprenant en outre un moyen de tension circonférentielle du canal circonférentiel.

8. Installation de tuyau de gaz d'échappement selon l'une quelconque des revendications précédentes, **caractérisée en ce qu'**un assemblage de chemise (6, 36, 10) est supporté à l'intérieur du corps principal (12), la section d'extrémité (14) et le deuxième organe tubulaire (8), l'assemblage de chemise comprenant une section de chemise (36) qui est supportée par la section d'extrémité (14).

9. Installation de tuyau de gaz d'échappement selon l'une quelconque des revendications précédentes, **caractérisée en ce que** le premier organe tubulaire (4) comprend un carter d'un moteur de turbine à gaz, et le deuxième organe tubulaire (8) comprend un tuyau de gaz d'échappement pour le moteur de turbine à gaz.

10. Moteur de turbine à gaz comprenant une installation de tuyau de gaz d'échappement selon la revendication 9.

11. Aéronef comprenant une cellule contenant un moteur de turbine à gaz selon la revendication 10, **caractérisé en ce que** le tuyau de gaz d'échappement (8) est fixe par rapport à la cellule.
